# EUROPEAN PATENT SPECIFICATION

(11) **EP 0 648 590 B1**
(45) Date of publication and mention of the grant of the patent: **10.06.1998**
(21) Application number: 94202977.8
(22) Date of filing: 13.10.1994
(51) Int. Cl.: B29C 45/42

(54) **Picking apparatus, preferably for an injection moulding machine**
Pflückanordnung, vorzugsweise für eine Spritzgussmaschine
Appareil de ramassage, de préférence pour une machine de coulage par injection

(30) Priority: 19.10.1993 SE 9303429
(43) Date of publication of application: 19.04.1995
(73) Proprietor: Gislaved Industriservice AB, S-332 28 Gislaved (SE)
(72) Inventor: Thorsson, Sven-Gunnar, S-332 91 Gislaved (SE); Carlsson, Ove, S-332 00 Gislaved (SE); Lidström, Jan-Ivar, S-332 00 Gislaved (SE)
(74) Representative: Wallengren, Yngvar

(56) References cited:
- EP-A- 0 205 152
- EP-A- 0 424 304
- US-A- 3 947 208
- US-A- 4 204 824
- US-A- 4 368 018
- Patent Abstracts of Japan, vol. 13, no. 71(M-799); & JP-A-63272514 (SONY CORP), 10-11-1988

## Description

### TECHNICAL FIELD

The present invention relates to a picking apparatus for such a machine as has two mutually reciprocating tool tables, preferably an injection moulding machine, and comprises a cam arrangement, with an approximately helical cam device and a cooperating cam follower, the cam device and the cam follower being interconnected each to one of the tool tables in order to realise a revolving movement on movement of the tool tables, this revolving movement being transferable to a picking arm which, on movement of the tool tables away from one another, is pivotal in between the tool tables and which, on movement of the tool tables towards one another, is pivotal out therefrom.

### BACKGROUND ART

An apparatus of the type mentioned by way of introduction is previously known in the art, see e.g. US-A-3 947 208 or US-A-4 368 018, and has its cam arrangement designed as two elongate, approximately spiralled rails which are secured in an injection moulding machine with the longitudinal direction parallel to the opening and closing direction of the machine. The cam arrangement is mounted on the upper side of the fixed tool table and extends out over the injection assembly of the machine.

In cooperation with the cam arrangement, the prior art construction displays a cam follower which engages, with a number of rollers, with the cam device and which has a long rod extending over both of the tool tables, the rod being rotary but axially fixed in an anchorage device on the movable tool table of the machine. The above-mentioned rod hereby extends straight over that area which is provided for mounting of moulding tools. A picking arm is non-rotationally fixed to the above-mentioned rod and is curved approximately U-shaped so that its free end is located out beside the injection moulding machine. On opening of the machine, the picking arm is pivoted with its free end in between the tool tables where a gripper provided on the picking arm may grasp an object in a moulding tool. When the machine is once again closed, the picking arm is pivoted out, with the grasped object which may either be released in order to drop down into some receptacle device, or possibly be transferred direct to a conveyor or similar arrangement.

In the prior art apparatus, the picking arm is thus driven by the movements of the tool table of the injection moulding machine, for which reason the movements of the picking arm are wholly synchronised with the work cycle of the injection moulding machine.

The prior art apparatus further includes means for displacing, in the longitudinal direction along the above rod, the anchorage of the picking arm so that the picking arm may execute a shorter movement in its position pivoted in between the tool tables in order, for example, to lift out an injection-moulded article from a mould core.

In certain cases, the prior art apparatus may function satisfactorily, but is bulky and impractical such that it must be dismantled in the event of tool change. Nor can the prior art apparatus be readily mounted or retrofitted on any given injection moulding machine, since it requires accurate alignment on unprocessed surfaces on the tool tables of the machine.

### PROBLEM STRUCTURE

The present invention has for its object to realise an apparatus of the type disclosed by way of introduction, the apparatus being designed in such a manner as to obviate the drawbacks inherent in the prior art technology. Thus, the present invention relates to the realisation of a picking apparatus which is compact and robust in its design and construction, which may simply be mounted or retrofitted on basically any optional injection moulding machine without any alignment problems whatsoever, and which affords high operational reliability, long service life and considerable precision, and which, above all, requires no increase in the work cycle time.

### SOLUTION

The objects forming the basis of the present invention will be attained if the apparatus disclosed by way of introduction is characterized in that the cam arrangement includes a substantially cylindrical guide portion which is non-rotatably connected to the one tool table and which carries the cam device, that the cam follower includes a sleeve slidable on the guide portion and rotary about the guide portion, the sleeve carrying a cam follower member and being rotary but axially fixedly connected to the one tool table, and that the picking arm is connected to the sleeve.

Further advantages will be attained if the apparatus according to the present invention is also given one or more of the characterizing features as set forth in appended Claims 2 to 11.

### BRIEF DESCRIPTION OF THE ACCOMPANYING DRAWINGS

The present invention will now be described in greater detail hereinbelow, with particular reference to the accompanying Drawings. In the accompanying Drawings:
- Fig. 1: is a schematic top plan view of an injection moulding machine with its tool tables in the closed position and provided with the apparatus according to the invention;
- Fig. 2: is a view corresponding to that of Fig. 1 in which, however, the tool tables are in their open position;
- Fig. 3: is a broken section taken approximately along the line A-A in Fig. 1; and
- Fig. 4: is a top plan view corresponding to a partial enlargement of Fig. 2, in which the picking arm is shown in two alternative positions.

### DESCRIPTION OF PREFERRED EMBODIMENT

The invention will be described hereinbelow as applied to an injection moulding machine, but of course the invention can also find application on other types of machines carrying moving reciprocating tool or mould tables, where at least the one is guided in a guide post, along parallel columns, or similar guides. Thus, the invention may be applied to different types of presses, compression moulding machines, injection moulding machines and the like.

Even though the alignment and mounting of the apparatus according to the present invention can be more difficult and must be carried out in a manner different from that described below, the present invention may also be applied to such machines as do not have the above-mentioned guide posts or guide columns, but display other types of guides.

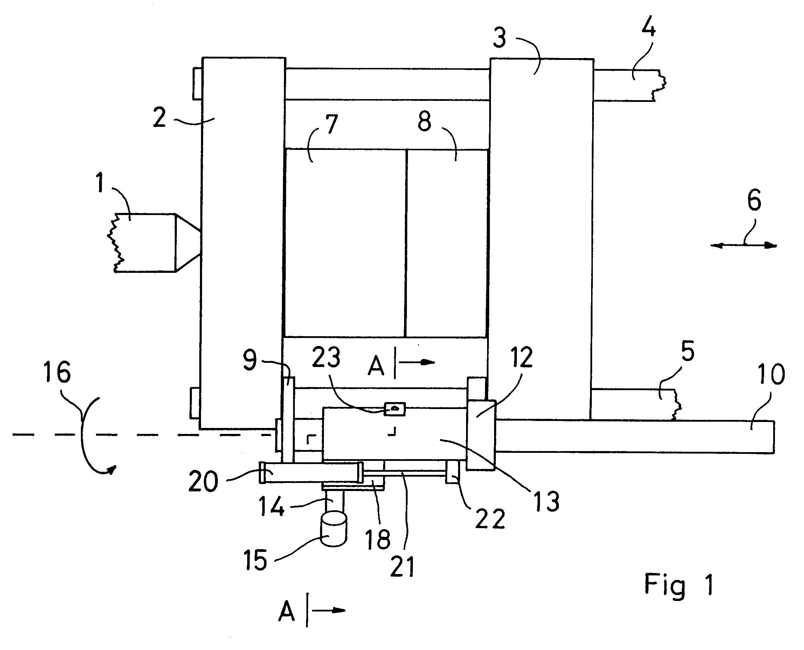

In Fig. 1, which shows a part of an injection moulding machine from above, reference numeral 1 relates to the injection unit of the injection moulding machine, reference numeral 2 to its fixed tool or mould table, while reference numeral 3 relates to the movable tool or mould table. Four columns extend in the longitudinal direction of the machine, the two uppermost being indicated at reference numerals 4 and 5. The right-hand ends (not shown) of these columns serve for anchorage of the crosspiece which carries one end of the closing mechanism (not shown) which also engages with the movable tool table 3 and sets the table in motion in accordance with the arrow 6 so that the tool mounted on the tool table is opened and closed. In such instance, the tool has two parts a fixed part 7 and a movable part 8.

The movable tool table 3 has guides by means of which it is displaceable without play along the columns in the machine.

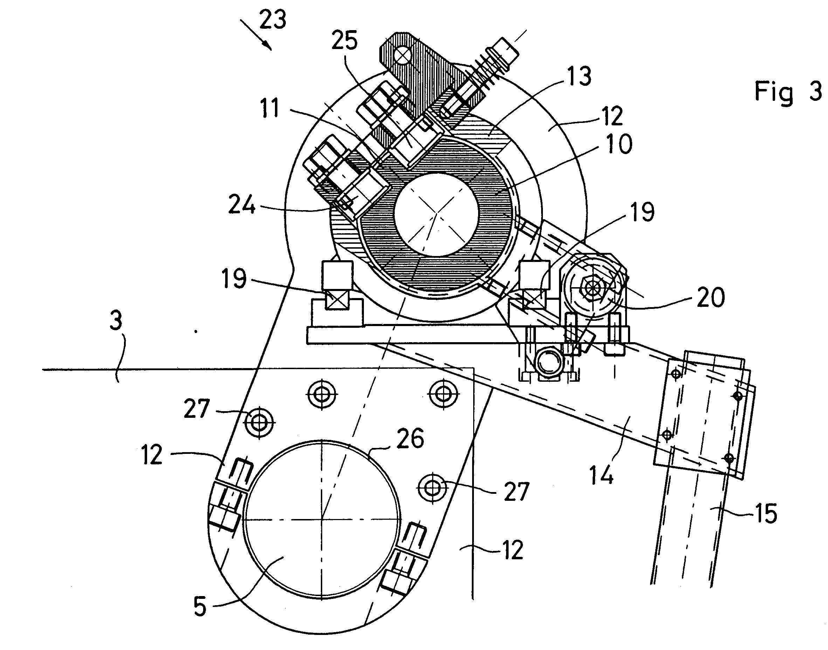

The present invention comprises a first anchorage 9 which may be secured in the fixed tool table 2 and which has aligning means 26 (see Fig. 3) by means of which it can be positionally fixed and aligned accurately in relation to the columns 5 of the machine. The anchorage 9 serves for securing of a guide portion 10 which carries a cam device 11 (see Fig. 3). The guide portion 10 is aligned in such a manner that its longitudinal direction is parallel with the columns 4 and 5 of the machine and is thereby also parallel with the direction of movement of the movable tool table 3.

According to the invention, there is disposed, on the movable tool table 3, a second anchorage 12 which also carries alignment means 26 (see Fig. 3) by means of which it can be accurately aligned and positionally fixed in relation to the column 5 of the machine. The second anchorage 12 carries a sleeve 13 which is connected to the anchorage and journalled in relation thereto such that it is axially fixed but freely rotary about its centre axis, at least within an angle sector of 180°.

The sleeve 13 is dimensioned in such a manner that it may be displaced substantially without play in the longitudinal direction of the guide portion 10. At the same time, the sleeve 13 is rotary in the relation to the guide portion. In order to achieve these properties, the guide portion 10 has a substantially cylindrical circumferential surface, while the sleeve has an interior journalling surface which, with appropriate fit, cooperates with the journal surface of the guide portion.

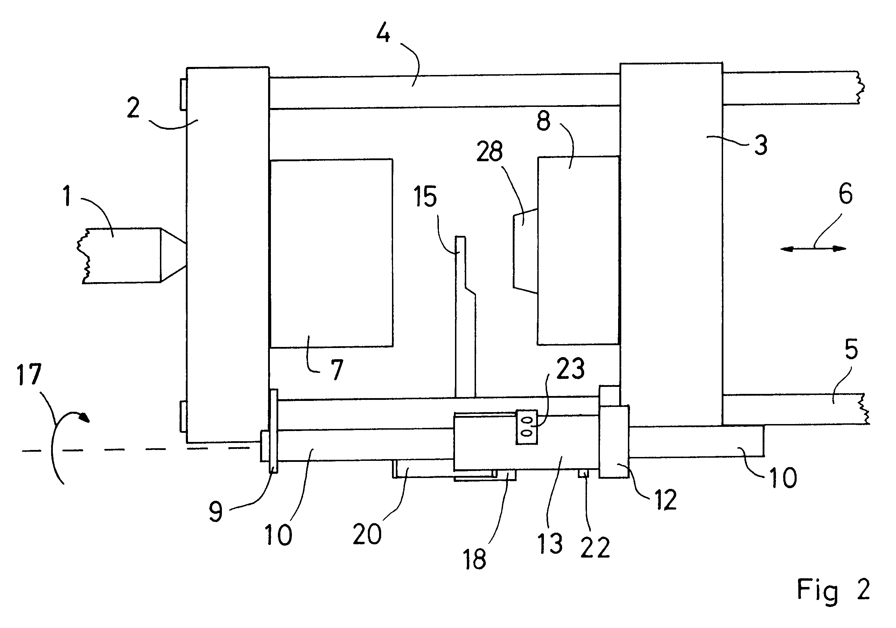

The second anchorage 12 is aligned and designed in such a manner that the axial direction of the sleeve 13 is parallel with the axial direction of the columns 5 of the machine, and is further dimensioned in such a manner that the distance from the centre of the sleeve to the centre of the column 5 corresponds to the distance from the centre of the guide portion 10 to the centre of the column 5. As a result, and as is apparent from Figs. 1 and 2, the guide portion 10 may be interiorly accommodated in the sleeve 13 and also extend through the anchorage 12, at the same time as the sleeve may, together with the movable tool table 3, be displaced along the guide portion 10 but also rotate about the guide portion.

The guide portion 10 carries a cam device 11 (see Fig. 3), which extends approximately helically along the guide portion in order thereby, on cooperation with a cam follower 23 carried by the sleeve, to realise a rotational movement in the sleeve when this undergoes a relative longitudinal movement along the guide portion. The cam device includes two mutually approximately parallel grooves which are provided in the circumferential surface of the guide portion 10 and which form therebetween a cam path 11 which extends radially out from the bottom of the groove and lies with its peripheral edge flush with the circumferential surface of the guide portion.

Suitably, the cam device has opposing end sections within which the pitch is somewhat greater than applies to the pitch along the central region of the cam device located between the end sections and interconnecting them. The transition between the end sections and the central region is gentle and continuous, for which reason the pitch in these transitional regions is gradually reduced from the value along the end sections to the value at the central region.

As has been mentioned above, the sleeve 13 carries a cam follower 23 which includes two rollers 24 and 25 (see Fig. 3) which abut against opposing flank surfaces of the cam path and where the one roller may suitably be spring-biased towards the other. The rollers are secured in and carried by the sleeve 13 and extend through an aperture in the wall of the sleeve in to the cam device.

A holder 14 is disposed in connection with the sleeve 13 and carries a replaceable picking arm 15 which, in the position according to Fig. 1, has its lower end spaced apart a greater distance laterally from the injection moulding machine than is the case for its upper end accommodated in the holder 14. In this position, the picking arm is located in a discharge position where it discharges objects taken from the tool 7, 8. The position is also the starting position for the movement cycle of the picking arm 15.

On displacement of the movable tool table 3 from the fixed tool table 2, the sleeve 13 will be pivoted in accordance with the arrow 16, in which event the picking arm 15 is pivoted in an arc with the centre line of the guide portion 10 as the centre of this pivotal movement. In such instance, the picking arm 15 is shaped and dimensioned in such a manner that its lower end passes free of the lower column which is located straight beneath the column 5 of the machine, whereby the picking arm 15 may be pivoted from the side in between the tool tables 2 and 3 when the machine is opened.

In Fig. 2, the opening of the movable tool table 3 has been fully completed and, further, the picking arm 15 has been pivoted in to a position between the tool tables 2 and 3 and specifically in register with a mould core 28 on the tool part 8 on the movable tool table.

When the movable tool table 3 is displaced in a direction to the left in Fig. 2, and the machine is thus closed, the sleeve 13 is rotated and the picking arm 15 carried thereby is turned according to the arrow 17 back to the position illustrated in Fig. 1, at the same time as the sleeve 13 is displaced axially along the guide portion 10.

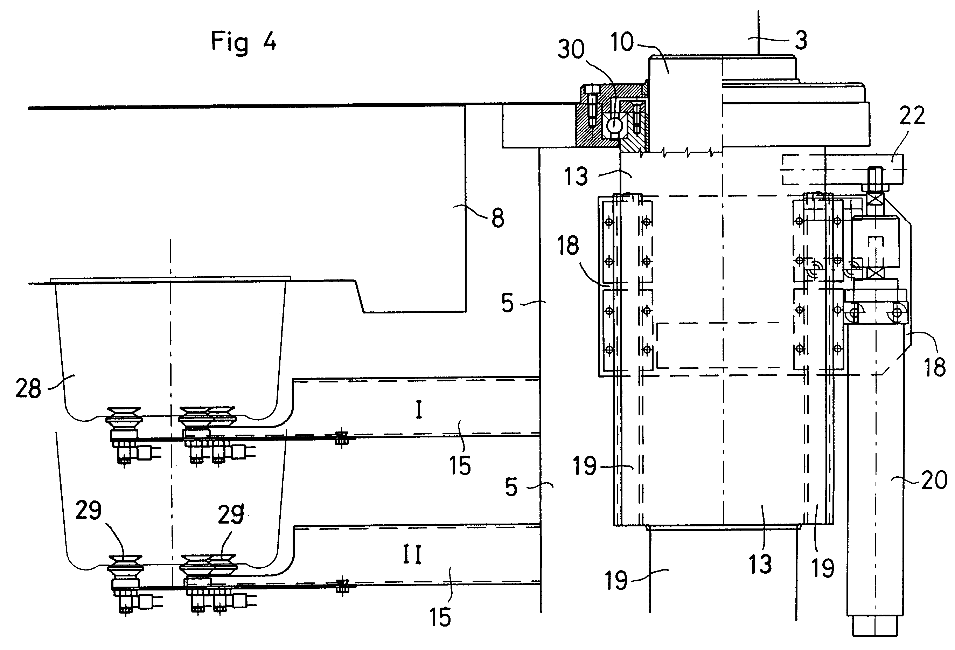

The picking arm 15 is primarily intended for picking out from the moulding tool an ingot or finished detail and has, therefore, suitable gripping devices 29 (these are not shown in Figs. 1 and 2, see Fig. 4). These gripping devices may possibly be movably disposed in relation to the free end of the picking arm 15 so that they can be displaced parallel with the direction of opening and closing of the injection moulding machine, so that the gripping devices may thereby enter into engagement with an object seated on the mould core 28.

Reversed use of the picking arm 15 is, of course, also possible, whereby the arm could thus be employed for placing a prefabricated detail into the tool 7, 8 so that this part or detail can be integrated with the object being manufactured in the tool.

According to an embodiment of the invention, the anchorage 14 of the picking arm 15 is placed on a plate 18 which is shiftably guided by means of guides 19 in the longitudinal direction of the sleeve 13. The plate is hereby displaceable in a direction which is parallel with the centre axis of the sleeve 13. An operating device 20 is secured on the plate 18, this being preferably in the form of a cylinder unit. The piston rod 21 of the cylinder unit is connected to an abutment portion 22 disposed on the sleeve 13. The operating cylinder 20 will hereby displace the plate 18 in the longitudinal direction of the sleeve 13 when it is pressurised.

As will have been apparent from the foregoing description, the picking arm 15 is thus partly reciprocally pivotal in accordance with the arrows 16 and 17 about the centre axis of the guide portion 10, at the same time as, in a basic movement, it follows the displacement of the sleeve 13 along the guide portion. In its position pivoted in between the tool tables 2 and 3, it may then, by activation of the operating cylinder 20, be given a further displacement movement parallel with the longitudinal direction of the guide portion 10 so that the gripping devices 29 placed on the picking arm may come into contact with an object placed on the mould core 28 and lift this object out from the mould core so that the object may then be pivoted, together with the picking arm 15, out from the region between the two tool tables.

The stroke length of the operating cylinder 20 is adjustable and may thereby be adapted to the design of the pertinent moulding tool.

As an alternative to the employment of the guides 19, a pivotal anchorage of the picking arm 15 on the sleeve 13 is also conceivable, in which event the pivot axis of the anchorage of the picking arm is at right angles to the longitudinal direction of the sleeve 13. The free end of the picking arm 15 may hereby execute a pendulum movement towards and away from the tool part 28 in the position according to Fig. 2.

It will be apparent from Fig. 3 how the cam follower 23 comprises two rollers 24 and 25 which abut against opposing sides of the cam device 11. It will also be apparent that these rollers 24 and 25 extend through an aperture in the sleeve 13.

It will further be apparent from the Figure that the anchorage 12 has a guide surface 26 which is designed to be complementary in relation to the guide 5 for the movable tool table 3 with which guide the anchorage cooperates and is aligned in relation to. In the embodiment illustrated here, the guide surface 26 is circular and permits a displacement movement in relation to the column 5. Further, the anchorage 12 has a number of anchorage screws 27 by means of which it is fixed on the planar surface of the tool table 3 intended for clamping purposes.

Fig. 4 shows the apparatus according to the invention with the plate 18 displaced along the guides 19 to a position proximal the movable tool table 3 of the machine. This position of the plate 18 corresponds to the position of the picking arm with the marking I, while on the other hand the position of the picking arm according to II corresponds to a position of the plate shifted along the guides 19 away from the movable tool table 3, hence the same position as shown in Fig. 2.

It will further be apparent from the Figure that the picking arm 15 has gripping devices in the form of suction cups 29 and that these suction cups are designed and placed so as to grip an object located on the mould core 28 and shift this object from position I to position II so that the object is freed from the mould part and can be pivoted out of the machine.

It will also be apparent from the Figure how the sleeve 13 extends into the anchorage 12 and is connected thereto via a journal 30. In the illustrated embodiment, the journal is a deep groove bearing which has good capacity to take up both axial and radial loadings.

## Claims

1. A picking apparatus for such a machine as has two mutually reciprocating tool tables (2) and (3), preferably an injection moulding machine, comprising a cam arrangement, with an approximately helical cam device (11) and a cooperating cam follower, the cam device and the cam follower being interconnected each to one of the tool tables in order to realise a revolving movement on movement of the tool tables, this revolving movement being transferable to a picking arm (15) which, on movement of the tool tables away from one another, is pivotal in therebetween and which, on movement of the tool tables towards one another, is pivotal out therefrom, **characterized in that** the cam arrangement includes a substantially cylindrical guide portion (10) which is non-rotatably connected to the one tool table (2) and which carries the cam device (11); **that** the cam follower includes a sleeve (13) slidable on the guide portion and rotary about the guide portion, the sleeve carrying a cam follower member (23) and being rotary but axially fixedly connected to the second tool table (3); **and that** the picking arm (15) is connected to the sleeve.

2. The picking apparatus as claimed in Claim 1, **characterized in that** the guide portion (10) is, with its longitudinal direction, parallel with the longitudinal direction of a guide (5) along which one of the tool tables (3) is movable.

3. The picking apparatus as claimed in Claim 2, **characterized in that** the guide portion (10) has an anchorage (9) which has alignment means (26) for cooperation with the guide (5).

4. The picking apparatus as claimed in Claim 2 or 3, **characterized in that** the sleeve (13) has an anchorage (12) in relation to which it is rotary about its centre axis but is axially fixed; and that the anchorage has alignment means (26) for cooperation with the guide (5).

5. The picking apparatus as claimed in Claim 4, **characterized in that** an end section of the guide portion facing away from the anchorage (9) of the guide portion (10) is movable through the sleeve (13) and its anchorage (12).

6. The picking apparatus as claimed in any one of Claims 1 to 5, **characterized in that** the cam device (11) includes grooves provided in the circumferential surface of the guide portion (10) and approximately helical in configuration, the grooves forming therebetween a cam path; **and that** the cam follower member (23) includes rollers (24, 25) engaging with the cam devices via an aperture in the wall of the sleeve (13), the rollers being carried by the sleeve.

7. The picking apparatus as claimed in any one of Claims 1 to 6, **characterized in that** the guide portion (10) is connected to a tool table (2) fixedly disposed in the machine, while the sleeve (13) is connected to a tool table (3) movably disposed in the machine.

8. The picking apparatus as claimed in any one of Claims 1 to 7, **characterized in that** the picking arm (15) is disposed on a carrier portion (14, 18) which, via guides (19) is shiftably secured on the sleeve (13) so that it is displaceable substantially parallel with the axial direction of the sleeve; **and that** a prime mover (20) is provided for operating the carrier portion relative to the sleeve.

9. The picking apparatus as claimed in any one of Claims 1 to 7, **characterized in that** the picking arm (15) is pivotally secured in the sleeve (13), the pivot axis of the picking arm being substantially at right angles to the axial direction of the sleeve, whereby the free end of the picking arm is reciprocally movable substantially parallel with the axial direction of the sleeve.

10. The picking apparatus as claimed in any one of Claims 1 to 9, **characterized in that** the free end of the picking arm (15) has a gripping device (29).

11. The picking apparatus as claimed in any one of Claims 1 to 10, **characterized in that** the cam device (11) has opposing end sections of greater pitch than the pitches along a central region therebetween.

## Patentansprüche

1. Übernahmevorrichtung für eine Maschine mit zwei gegenseitig hin- und hergehenden Werkzeugtischen (1) und (2), vorzugsweise eine Spritzgußmaschine, mit einer Nockenanordnung mit einem etwa schraubenförmigen Nocken (11) und einem mit diesem zusammenwirkenden Nockenstößel, wobei der Nocken und der Nockenstößel jeweils mit einem der Werkzeugtische verbunden ist, um bei Bewegung der Werkzeugtische eine Drehbewegung auszuführen, die auf einen Übernahmearm (15) übertragbar ist, der bei gegenseitiger Entfernung der Werkzeugtische zwischen diese einschwenkbar ist und bei gegenseitiger Annäherung der Werkzeugtische von ihnen ausschwenkbar ist, dadurch gekennzeichnet, daß die Nockenanordnung ein im wesentlichen zylindrisches Führungsteil (10) umfaßt, das mit dem einen Werkzeugtisch drehfest verbunden ist und den Nocken (11) trägt, daß der Nockenstößel eine auf dem Führungsteil gleitbare und um diesen drehbaren Hülse (13) umfaßt, die ein Nockenstößelelement (23) trägt und mit dem zweiten Werkzeugtisch (3) drehbar, jedoch axial fest verbunden ist, und daß der Übernahmearm (15) mit der Hülse verbunden ist.

2. Übernahmevorrichtung nach Anspruch 1, dadurch gekennzeichnet, daß die Längsrichtung des Führungsteils (10) parallel zur Längsrichtung einer Führung (5) verläuft, längs der einer der Werkzeugtische (3) beweglich ist.

3. Übernahmevorrichtung nach Anspruch 2, dadurch gekennzeichnet, daß das Führungsteil (10) eine Verankerung (9) hat, die eine Ausfluchteinrichtung (26) zur Zusammenwirkung mit der Führung (5) aufweist.

4. Übernahmevorrichtung nach Anspruch 2 oder 3, dadurch gekennzeichnet, daß die Hülse (13) eine Verankerung (12) hat, relativ zu der sie um ihre Mittelachse drehbar, jedoch axial fixiert ist, und daß die Verankerung Ausfluchtmittel (26) zur Zusammenwirkung mit der Führung (5) hat.

5. Übernahmevorrichtung nach Anspruch 4, dadurch gekennzeichnet, daß ein Endabschnitt des Führungsteils, der von seiner Verankerung (9) abgewandt ist, durch die Hülse (13) und ihre Verankerung (12) beweglich ist.

6. Übernahmevorrichtung nach einem der Ansprüche 1 bis 5, dadurch gekennzeichnet, daß der Nocken (11) Rillen hat, die in der Umfangsfläche des Führungsteils (10) vorgesehen und etwa schraubenförmig ausgebildet sind und zwischen sich ein Nockenband bilden und daß das Nockenstößelelement (23) Rollen (24,25) hat, die durch eine Öffnung in der Wand der Hülse (13) mit den Nocken in Eingriff sind und von der Hülse getragen werden.

7. Übernahmevorrichtung nach einem der Ansprüche 1 bis 6, dadurch gekennzeichnet, daß der Führungsteil (10) mit einem in der Maschine fest angeordneten Werkzeugtisch (2) verbunden ist, während die Hülse (13) mit einem in der Maschine beweglich angeordneten Werkzeugtisch (3) verbunden ist.

8. Übernahmevorrichtung nach einem der Ansprüche 1 bis 7, dadurch gekennzeichnet, daß der Übernahmearm (15) auf einem Trägerteil (14,18) angeordnet ist, das über Führungen (19) auf der Hülse (13) verschiebbar angebracht ist, so daß es im wesentlichen parallel zur Axialrichtung der Hülse verschiebbar ist, und daß ein Antrieb (20) für den Betrieb des Trägerteils relativ zu der Hülse vorgesehen ist.

9. Übernahmevorrichtung nach einem der Ansprüche 1 bis 8, dadurch gekennzeichnet, daß der Übernahmearm (15) schwenkbar an der Hülse (13) angebracht ist, wobei die Schwenkachse des Übernahmearms im wesentlichen rechtwinklig zur Axialrichtung der Hülse steht, wodurch das freie Ende des Übernahmearms im wesentlichen parallel zur Axialrichtung der Hülse hin und her beweglich ist.

10. Übernahmevorrichtung nach einem der Ansprüche 1 bis 9, dadurch gekennzeichnet, daß das freie Ende des Übernahmearms (15) eine Greifereinrichtung (29) hat.

11. Übernahmevorrichtung nach einem der Ansprüche 1 bis 10, dadurch gekennzeichnet, daß der Nocken (12) entgegengesetzt Endabschnitte mit einer Steigung hat, die größer als die Steigungen in dem mittleren Bereich dazwischen ist.

## Revendications

1. Appareil de ramassage pour une machine qui a deux tables d'outil mutuellement en va-et-vient (2 et 3), de préférence une machine de moulage par injection, comprenant un mécanisme à came avec un dispositif de came sensiblement hélicoïdal (11) et un palpeur de came coopérant, le dispositif de came et le palpeur de came étant interconnectés chacun à une des tables d'outil afin d'engendrer un mouvement de pivotement lors du mouvement des tables d'outil, ce mouvement de pivotement étant transférable à un bras de ramassage (15) qui pivote, lors du mouvement d'éloignement mutuel des tables d'outil, entre ces dernières et qui pivote, lors du mouvement de rapprochement mutuel des tables d'outil, à l'extérieur de celles-ci, caractérisé en ce que le mécanisme de came comprend une partie de guidage sensiblement cylindrique (10) qui est reliée de façon non tournante à la première table d'outil (2) et qui porte le dispositif de came (11) ; en ce que le palpeur de came comprend un manchon (13) qui peut coulisser sur la partie de guidage et tourner autour de la partie de guidage, le manchon portant un élément de palpeur de came (23) et étant relié de façon tournante mais axialement fixe à la deuxième table d'outil (3) ; et en ce que le bras de ramassage (15) est relié au manchon.

2. Appareil de ramassage suivant la revendication 1, caractérisé en ce que la partie de guidage (10) est parallèle, dans sa direction longitudinale, à la dirction longitudinale d'un guidage (5) le long duquel se déplace une des tables d'outil (3).

3. Appareil de ramassage suivant la revendication 2, caractérisé en ce que la partie de guidage (10) possède un ancrage (9) qui a des moyens d'alignement (26) pour coopération avec le guidage (5).

4. Appareil de ramassage suivant la revendication 2 ou 3, caractérisé en ce que le manchon (13) possède un ancrage (12) par rapport auquel il peut tourner autour de son axe central mais il est axialement fixe ; et en ce que l'ancrage possède des moyens d'alignement (26) pour coopération avec le guidage (5).

5. Appareil de ramassage suivant la revendication 4, caractérisé en ce qu'une région d'extrémité de la partie de guidage , à l'opposé de l'ancrage (9) de la partie de guidage (10), est déplaçable à travers le manchon (13) et son ancrage (12).

6. Appareil de ramassage suivant une quelconque des revendications 1 à 5, caractérisé en ce que le dispositif de came (11) comprend des rainures prévues dans la surface circonférentielle de la partie de guidage (10) et de configuration sensiblement hélicoïdale, les rainures définissant entre elles un chemin de came ; et en ce que l'élément de palpeur de came (23) comprend des galets (24,25) qui viennent en contact avec le dispositif de came à travers une ouverture de la paroi du manchon (13), les galets étant portés par le manchon.

7. Appareil de ramassage suivant une quelconque des revendications 1 à 6, caractérisé en ce que la partie de guidage (10) est reliée à une table d'outil (2) disposée de façon fixe dans la machine , tandis que le manchon (13) est relié à une table d'outil (3) disposée de façon mobile dans la machine.

8. Appareil de ramassage suivant une quelconque des revendications 1 à 7, caractérisé en ce que le bras de ramassage (15) est disposé sur un élément de support (14,18) qui est fixé de façon déplaçable, par l' intermédiaire de guidages (19), sur le manchon (13) de sorte qu'il est déplaçable sensiblement parallèlement à la direction axiale du manchon ; et en ce qu'un orane moteur (20) est prévu pour déplacer l'élément de support par rapport au manchon.

9. Appareil de ramassage suivant une quelconque des revendications 1 à 7, caractérisé en ce que le bras de ramassage (15) est fixé de façon pivotante au manchon (13), l'axe de pivot du bras de ramassage étant sensiblement perpendiculaire à la direction axiale du manchon, de sorte que l'extrémité libre du bras de ramassage se déplace en va-et-vient sensiblement parallèlement à la direction axiale du manchon.

10. Appareil de ramassage suivant une quelconque des revendications 1 à 9, caractérisé en ce que l'extrémité libre du bras de ramassage (15) est pourvue d'un dispositif de prise (29).

11. Appareil de ramassage suivant une quelconque des revendications 1 à 10, caractérisé en ce que le dispositif de came (11) comprend des parties d'extrémité opposées dont le pas est plus grand que le pas le long d'une région centrale située entre ces parties.
